(19) Europäisches Patentamt

**European Patent Office**

Office européen des brevets

(11) Numéro de publication: **0 202 131**
**B1**

(12) **FASCICULE DE BREVET EUROPEEN**

(45) Date de publication du fascicule du brevet:
**19.07.89**

(21) Numéro de dépôt: **86400540.0**

(22) Date de dépôt: **14.03.86**

(51) Int. Cl.⁴: **F16L 33/00,** F16L 27/10,
F16J 3/04

(54) **Dispositif d'ancrage d'un système tubulaire souple sur un épaulement rigide grâce à une armature fragmentée.**

(30) Priorité: **12.04.85 FR 8505505**

(43) Date de publication de la demande:
**20.11.86 Bulletin 86/47**

(45) Mention de la délivrance du brevet:
**19.07.89 Bulletin 89/29**

(84) Etats contractants désignés:
**AT BE CH DE FR GB IT LI LU NL SE**

(56) Documents cités:
**CH-A- 488 119**
**US-A- 2 262 311**
**US-A- 2 298 736**
**US-A- 3 861 721**

(73) Titulaire: **Caoutchouc Manufacturé et Plastiques Société Anonyme dite:, 143 bis rue Yves Le Coz B.P. 554, F-78005 Versailles Cedex(FR)**

(72) Inventeur: **Bechu, Jean Pierre, "Les Poissons" 20Ter, rue de Bezons, F-92400 Courbevole(FR)**
Inventeur: **Daignot, Bernard, Sougy S/Loire, F-58300 Decize(FR)**
Inventeur: **Roux, Claude, 101, route nationale Saint Leger des Vignes, F-58300 Decize(FR)**

## Description

La présente invention est relative à un système d'ancrage des éléments de traction d'une structure tubulaire souple sur l'ouverture d'une paroi rigide ledit ancrage étant exercé par appui axial sur un épaulement ou une bride après passage par une ouverture ménagée dans la dite paroi rigide.

Dans la suite du texte, pour simplifier l'exposé de l'invention, le terme "manchon" sera utilisé pour définir la structure annulaire souple, le terme "talon" définissant l'extrémité du manchon qui présente un diamètre supérieur à celui du manchon et prend appui sur la paroi rigide, ci-après désignée par le terme "contre-bride".

On connait des manchons avec talon souple, dans lesquels le talon comporte, généralement, une armature interne, c'est à dire noyée dans le caoutchouc, de forme annulaire, constituée de caoutchouc à module élevé, d'une bande de textile, d'un toron textile ou métallique ou encore d'un ressort souple. Ce type de renforcement est adopté pour rendre le talon déformable afin de permettre le montage des contre-brides après la fabrication du manchon, par passage forcé du talon dans l'alésage.

L'inconvénient majeur de ces systèmes réside dans la nécessité d'un pincement entre deux plans de la bride plane, selon le dispositif adopté, par exemple, par la Société Kléber Industrie pour ses manchons de compensation Dilatoflex NT (dossier technique 79-BA1) soit encore par utilisation d'une forme, obtenue par usinage, pour qu'une pièce rigide vienne prendre appui sur un diamètre intérieur à ce talon déformable, comme, par exemple, dans les membranes de suspensions pneumatiques décrites dans le brevet Continental FR 2 127 561 ou dans les manchons compensateurs de dilatation décrits dans les brevets FR 2 280 853 de Berghoffer ou FR 2 033 789 de Pirelli ou FR 2 006 730 de Continental.

Ces systèmes de manchons à talons souples nécessitent donc des techniques de montage qui provoquent, souvent, une forte concentration de contrainte à l'extrémité de la contre-bride, pouvant aller jusqu'à l'endommagement ou même la destruction de la fonction étanchéité. De ce fait, les manchons usuels à talons souples ne peuvent être utilisés que pour des pressions de service modérées.

Pour remédier à ces inconvénients, des solutions de talons rigides, à large surface de contact avec la bride ont été proposées. C'est, en effet, la solution adoptée par Kléber Industrie pour ses brides intégrées de tuyau, système Endflex (décrit dans le catalogue de tuyau Performer AD10, page 4) ou encore dans ses manchons de dilatation Dilatoflex K décrits dans le catalogue FC175-18 de juin 1984.

Ces dispositifs présentent, tous, une grande rigidité et sont, le plus souvent réalisés avec des éléments métalliques. De par leur conception, le caoutchouc se trouve comprimé sur une large surface d'appui ce qui améliore la répartition des contraintes et réduit la sensibilité au fluage, assurant, de ce fait, une meilleure garantie d'étanchéité et une possibilité d'utilisation à des pressions de service élevées.

Par contre, ces talons présentent, en raison de leur rigidité, l'inconvénient d'interdire le montage de contre-brides monoblocs après fabrication du manchon. Il est donc nécessaire de procéder au montage desdites contre-brides en cours de production et de vulcaniser le manchon ainsi équipé de ces pièces métalliques, qui en augmentent considérablement le poids et le volume.

En outre, les contre-brides ne sont plus démontables comme le montrent les catalogues Stenflex et General Rubber. Le fabricant des manchons doit alors constituer un stock important afin de disposer de manchons équipés de brides conformes aux différents raccordements normalisés.

Un manchon à brides démontables est décrit dans le brevet FR 2 447 512 mais les talons sont rigides et comportent des colleret-tes de renforcement séparées du manchon. La solution proposée, qui consiste à entourer la collerette par une forme de caoutchouc en U, nécessite la réalisation d'un moule très complexe.

Un tuyau dont l'extrémité comprend un élément annulaire muni de fentes permettant sa dilatation ou sa contraction dans des limites définies pour le montage d'une bride intégrée est décrit dans le brevet US 2 298 736. Un tel dispositif nécessite la pose de la bride en cours de fabrication et ne permet pas son démontage en cas d'avarie du manchon.

Comme on peut le voir, d'après l'analyse précédente, une solution conforme à l'état de la technique et qui permette de répondre aux exigences de qualité d'ancrage (pour résister à des pressions ou à des tractions importantes en service) et de facilité de montage sur une bride ou un épaulement rigide, n'est pas connue.

L'invention a donc pour objet la réalisation d'un dispositif d'ancrage qui offre les avantages des deux types de talons connus sans en subir les inconvénients. Ledit ancrage est obtenu par un talon présentant une large surface d'appui sur la bride ou l'épaulement tout en offrant une souplesse permettant un pliage pour le passage du talon dans l'alésage.

L'invention permet ainsi une fabrication plus simple du manchon en éliminant les problèmes de poids et de volume dus à l'obligation de monter – dans les solutions connues antérieurement – les contre-brides, en cours de fabrication et surtout elle réduit, d'une manière considérable, ce qui représente un gain économique essentiel, la nécessité de maintenir un stock important de pièces en raison des différents raccordements, puisque la même gamme de manchons peut être équipée, au moment de la livraison, des différents types de contre-brides du commerce ou spéciales pour des fabrications à la demande. La gestion et la commercialisation des manchons se trouvent, ainsi, grandement facilitées; les délais de livraison sont réduits de manière importante.

L'invention consiste en un dispositif d'ancrage radial de structures tubulaires souples telles que des tuyaux en caoutchouc, des manchettes déformables, des compensateurs de dilatation, des membranes de suspension, sur l'ouverture d'une paroi rigide, par appui sur un épaulement ou une bride après passage par une ouverture ou un alésage pratiqués sur la dite paroi rigide, caractérisé en ce que la structure tubulaire souple – ou manchon – comporte au moins un talon renforcé par une armature fragmentée noyée au sein du caoutchouc, constituée d'éléments rigides indépendants afin d'offrir au talon une possiblité de pliage lui permettant de se glisser dans l'alésage de la paroi rigide sans altérer – après retour à la forme plane – la rigidité radiale qui confère audit talon la tenue nécessaire à son bon fonctionnement en service, lorsqu'il est serré entre la bride et la contre-bride.

L'élément essentiel de l'invention réside dans l'armature fragmentée de renforcement du talon, frette métallique ou plastique, de rigidité élevée, constituée d'éléments, de formes géométriques variées, indépendants les uns des autres. Au moment de la fabrication du manchon, il est nécessaire de positionner les éléments de l'armature fragmentée dans le moule.

Cette opération peut être réalisée de plusieurs manières:

– soit en plaçant les éléments individuels dans le moule même;
– soit, dans une phase de pré-confection, en disposant les éléments sur un support comportant une couche de mélange à base de caoutchouc, avec ou sans embase textile.

Dans tous les cas, un espace généralement compris entre 0,5 et 50% de la largeur d'un élément de l'armature fragmentée sera laissé libre entre deux éléments adjacents pour que puissent se créer des "ponts de gomme", c'est-à-dire de liaisons physico-chimiques entre les mélanges à base de caoutchouc situés, dans le moule, au dessus et en dessous de l'armature fragmentée et pour obtenir une possibilité de pliage mécanique radial du talon, lors du montage dans la contre-bride de raccordement.

Au moment de la confection du manchon, l'armature fragmentée peut être placée dans le talon soit nue, soit enveloppée d'un pli de mélange de caoutchouc ou encore d'un matériau textile fin, les deux dernières possibilités ayant l'avantage d'éviter la blessure de la carcasse du manchon au contact des angles de l'armature fragmentée.

Les éléments individuels, adhérisés ou non, noyés dans le caoutchouc forment, après vulcanisation, une armature rendant le talon rigide, grâce à la grande rigidité de compression des "ponts de gomme" cités plus haut.

Cependant, ces éléments individuels s'articulent les uns par rapport aux autres sans blesser la carcasse de renforcement du manchon et permettent le passage du talon dans l'alésage, par pliage dudit talon devenu souple, la réouverture du talon sur l'épaulement se faisant naturellement après mise en place des contre-brides. Le talon, bloqué entre la bride de raccordement et la contre-bride ou l'épaulement reste de rigidité radiale équivalente à celle d'un talon comportant une armature monobloc par effet d'auto-coincement.

L'armature fragmentée est réalisée, préférentiellement, en métal tel que de l'acier, de l'aluminium, du zamak ou tout autre matériau (plastique renforcé ou composite) dont le module est supérieur à 1500 MPa.

Le nombre des éléments individuels constituant l'armature fragmentée est, de préférence compris entre 7 et 13, mais il peut être aussi grand que le permettent la résistance du matériau et l'économie de fabrication.

La forme générale des éléments inviduels est, le plus souvent, trapézoïdale mais d'autres possibilités telles que, à titre d'exemples non limitatifs, des formes rectangulaires, triangulaires, en losange ou en double trapèze pourraient être envisagées ; elles compliqueraient la fabrication des éléments de l'armature fragmentée mais ne nuiraient pas au fonctionnement.

Les zones de séparation des éléments individuels sont, le plus généralement, orientées radialement mais le fonctionnement du renforcement n'est pas perturbé si les zones de séparation présentent, par rapport au plan diamétral, une inclinaison faible, comprise entre 0 et 40°.

Les zones de séparation des éléments individuels de l'armature sont rectilignes, dans le cas le plus fréquent, mais peuvent prendre la forme d'arcs de cercles, de courbes quelconques ou de chevrons.

Les caractéristiques et variantes de l'invention seront mieux comprises à la lecture de la description ci-après et en se référant aux dessins, sur lesquels:

– la figure 1 est une vue "en écorché" du talon d'un manchon compensateur de dilatation comportant une armature classique sur la vue 1a et une armature fragmentée sur la vue 1b.
– la figure 2 montre la structure d'un manchon souple comportant des talons.
– les figures 3, 4 et 5 représentent diverses réalisations de l'armature fragmentée pour le renforcement du talon.
– la figure 6 illustre différentes formes que peuvent prendre les éléments indididuels de l'armature fragmentée.
– la figure 7 montre la possibilité de confection de l'armature du talon.
– la figure 8 schématise le principe de montage des contre-brides.
– les figures 9 et 10 représentent, à titre d'exemples non limitatifs, quelques applications particulières de l'invention.

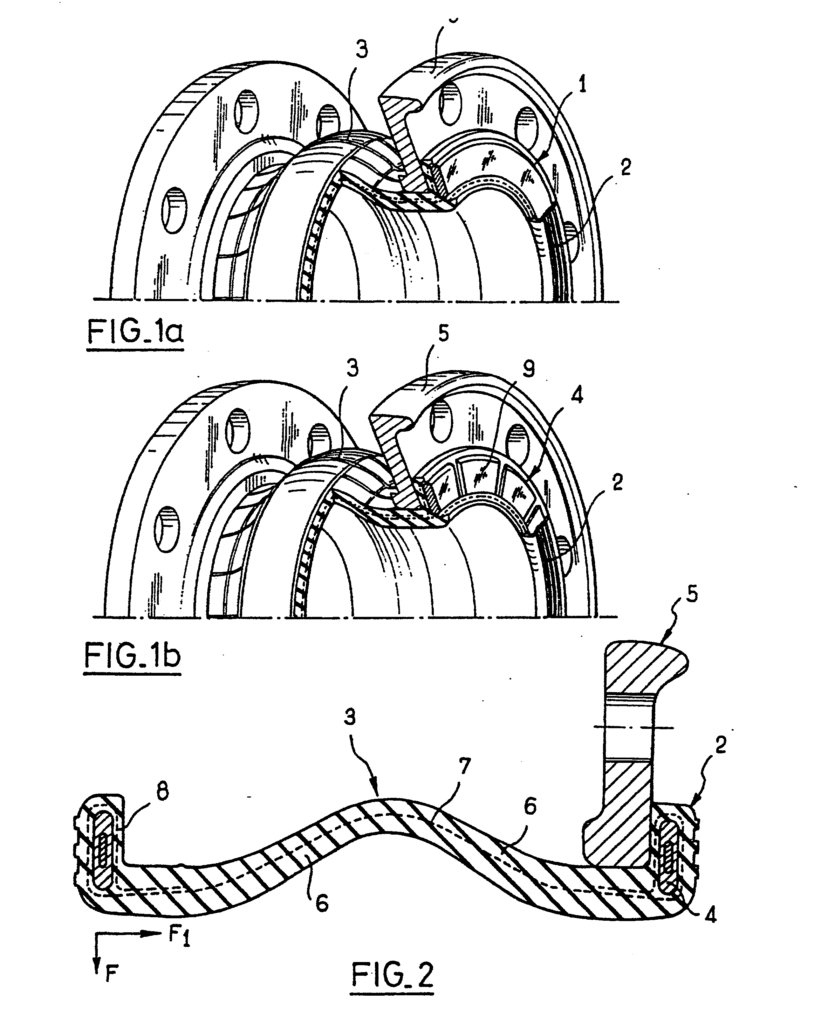

On peut voir, sur la figure 1, l'armature du talon (2) d'un manchon compensateur de dilatation (3) classique (1) à talon rigide muni de sa contre-bride (5) sur la vue 1a et l'armature fragmentée (4) du talon (2) qui s'y substitue d'après l'invention sur la vue 1b.

La figure représente la pièce que l'on obtiendrait après élimination de la couche supérieure, en caoutchouc, du talon (2) ainsi dénudé jusqu'à son armature (1) ou (4) selon le cas.

La figure 2 schématise, en coupe, la structure d'un manchon (3) dont le corps en caoutchouc (6) est armé d'une carcasse de câblés textiles ou métalliques (7) et dont les talons (2), qui s'appuient sur l'épaulement ou la contre-bride (5), sont renforcés par les armatures fragmentées (4). On peut y remarquer la remontée (8) de la carcasse (7) autour de l'armature (4) dans la zone des talons (2).

Cette figure montre également la force F qui se développe lors de la mise sous pression du manchon et bloque les éléments individuels de l'armature (4), les uns contre les autres, dans un effet d'auto-coincement et ce, sans déplacement desdits éléments individuels. La force F1 est la force de traction qui s'exerce sur la carcasse textile ou métallique (7) du manchon (3). La résistance à l'effort de traction F1, ou rigidité, n'est pas affectée par l'absence de continuité de l'armature, les performances du manchon (3) restant identiques, en service, à celles qui seraient obtenues avec un manchon à talons renforcés par des armatures rigides continues.

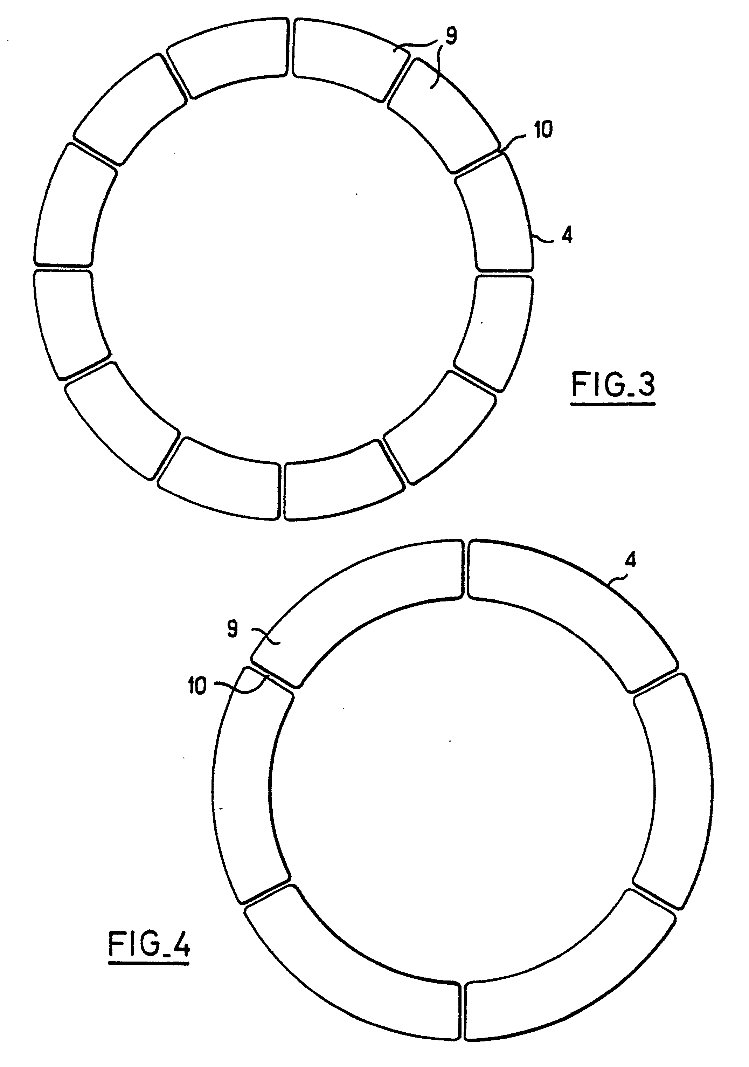

La figure 3 illustre une des configurations parmi les plus usuelles de l'armature fragmentée. L'armature fragmentée (4) est constituée de 12 éléments individuels (9) de même taille, de forme générale trapézoïdale, séparés par des zones (10) destinés à la formation des ponts de gomme par les mélanges à base de caoutchouc qui entourent l'armature, ces zones présentant une épaisseur faible par rapport à celle de l'élément individuel (9).

La figure 4 montre une autre configuration de l'armature fragmentée (4) dans laquelle le nombre des éléments individuels (9) est limité à 6. Dans cette réalisation des éléments individuels (9) sont tous de taille identique. Les zones de séparation (10) restent d'épaisseur faible par rapport à celle des éléments individuels (9).

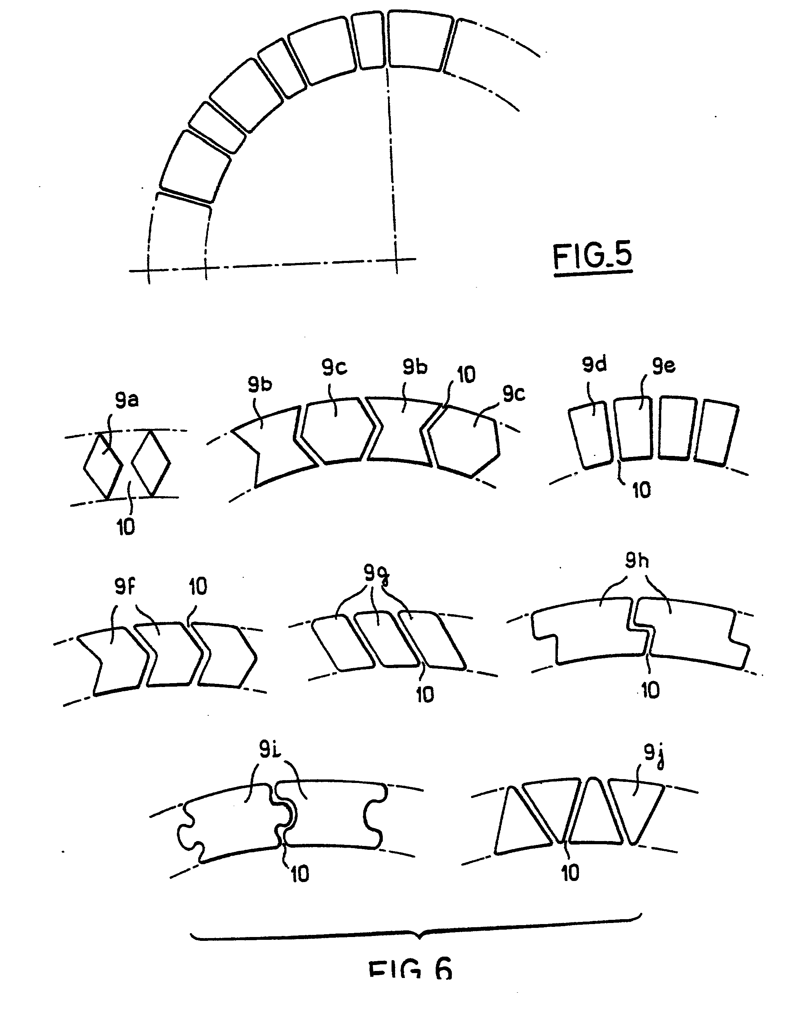

La figure 5 illustre une variante de réalisation de l'armature fragmentée (4) dans laquelle le nombre des éléments individuels (9) est de 32, leur forme générale trapézoïdale, leur taille différente et leur arrangement du type alternance d'un grand élément et d'un petit élément.

La figure 6 décrit, à titre d'exemples non limitatifs, quelques unes des formes qu'il est possible de donner aux éléments individuels (9) de l'armature fragmentée (4). C'est ainsi que les éléments (9a) sont en forme de losange et laissent entre eux une zone (10) de surface importante pour la liaison des mélanges à base de caoutchouc entourant l'armature fragmentée. Les éléments (9b) et (9c) sont en forme de double trapèze liés par la petite base dans le cas (9b) et par la grande base dans le cas (9c). Les formes (9b) et (9c) sont, généralement, utilisées ensemble et laissent entre elles une zone de séparation (10) de faible surface. Il serait également possible de n'associer que des éléments de forme (9b) ou que des éléments de forme (9c) ce qui accroîtrait la souplesse du talon en rendant plus importante la surface de la zone de séparation permettant les points de gomme qui sépareront deux éléments voisins. Ces configurations ne sont pas représentées sur le dessin.

Les formes (9d) et (9e) sont pratiquement rectangulaires et peuvent être séparées par une zone (10) de la largeur désirée pour la souplesse du talon.

Les formes en chevron (9f) ou les formes plus complexes telles que (9h) et (9i) peuvent s'utiliser dans une structure quasi imbriquée ou avec une zone de séparation (10) de la largeur désirée entre deux ou plusieurs éléments.

Avec la forme parallélépipédique (9g) il est possible d'obtenir, - comme avec les formes (9b), (9c), (9h), (9i) et (9j), - un effet de coincement plus important qu'avec les formes (9a), (9d) et (9e) en raison de la forme même des éléments individuels.

Les formes triangulaires (9j) se prêtent à un montage tel que décrit sur le dessin comme à un assemblage (non représenté) où toutes les pointes ou toutes les bases des éléments triangulaires seraient dirigées vers le centre de l'armature fragmentée. Cette dernière configuration laisse entre deux éléments successifs (9) une zone de séparation (10) plus large et accroît, par conséquent, la souplesse du talon (2).

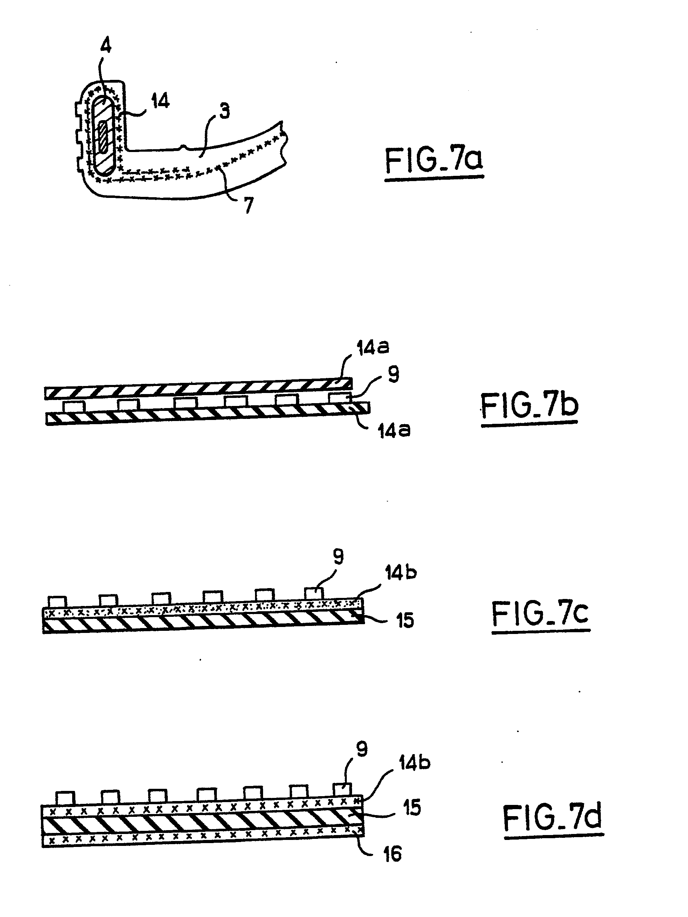

Sur la figure 7, la vue (a) décrit une possibilité de protection de la carcasse de renforcement (7) du manchon (3) en entourant l'armature fragmentée (4) par un pli protecteur (14) constitué de mélange à base de caoutchouc ou d'un textile fine pour protéger ladite carcasse de renforcement d'une blessure au contact des bords des éléments individuels (9) de l'armature fragmentée (4). Cette structure s'obtient, au cours de la phase de pré-confection de l'armature du manchon.

La vue 7b montre une telle réalisation de pré-confection de l'armature fragmentée à partir de plis protecteurs de caoutchouc (14a) alors que les vues 7c et 7d schématisent la pose du pli protecteur textile (14b) sur une feuille de caoutchouc cru (15) servant de support, seule comme dans la vue 7c ou qui peut être, elle-même, solidaire d'un substrat textile (16) comme dans la vue 7d.

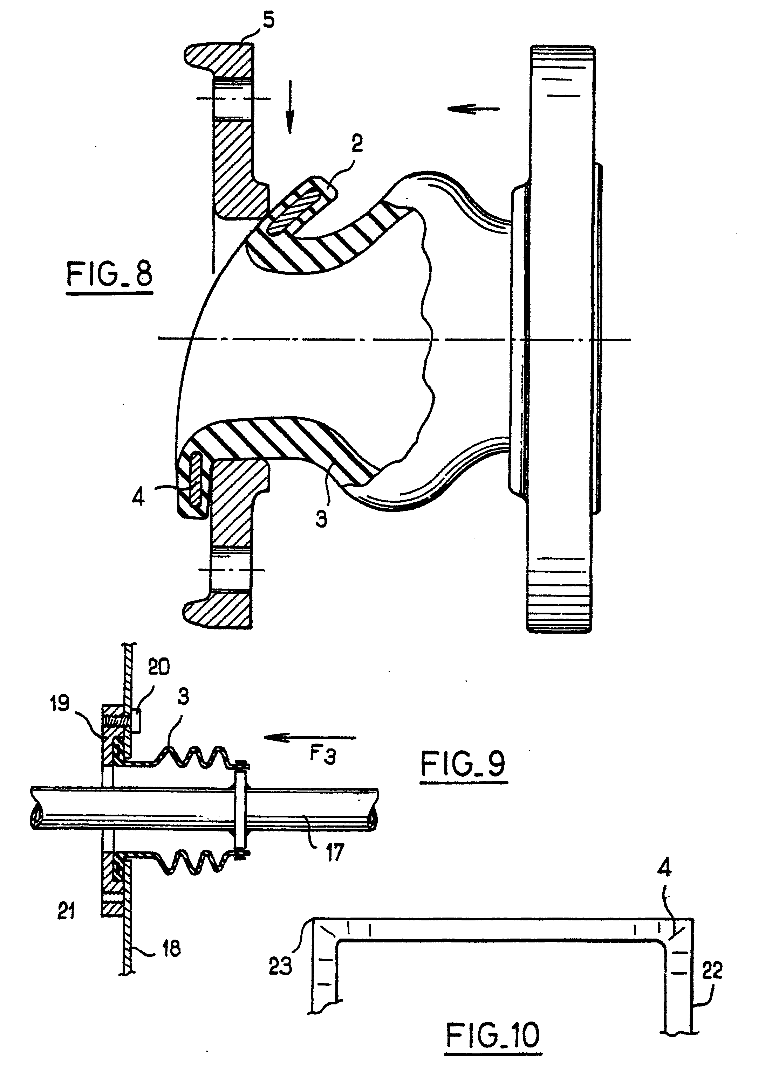

La figure 8 schématise le montage des contre-brides (5) sur le manchon (3) par passage forcé du talon (2), comportant l'armature fragmentée (4), constituée des éléments individuels au travers de l'alésage de la contre-bride (5).

La figure 9 illustre une application de l'invention à la traversée d'une cloison ou d'une paroi (18), (par exemple, celle d'une réservoir ou d'un tuyau rigide) par une tuyauterie, une tige ou une gaine (17) maintenue par un manchon (3) grâce à une bride (19) fixée par boulons (20) lorsque la partie interne (21) est inaccessible. La flèche F3 indique le sens de montage.

Les figures précédentes ont été illustrées le plus souvent par l'application à des pièces de révolution, mais le dispositif d'ancrage proposé n'est pas limité à ce type de pièces ; son fonctionnement serait tout aussi satisfaisant pour le montage sur des pièces dont l'ouverture serait ovale ou rectangulaire.

La figure 10 donne, à titre non limitatif, l'exemple d'une ouverture rectangulaire telle que celle d'une gaine de ventilation (22) dans laquelle l'armature fragmentée (4) ne serait insérée que dans les zones angulaires (23) de la gaine.

Les applications de l'invention ne sont pas limitées aux cas illustrés. Entre autres possibilités, il est avantageux d'utiliser le système décrit dans l'invention pour l'ancrage des extrémités, qui sont alors surmoulées de caoutchouc, de cables de tension ou de précontrainte, ou encore pour l'ancrage sur une ouverture de forme quelconque des dispositifs souples d'évacuation d'urgence dans les bâtiments.

Comme on le voir, par la description et les illustrations précédentes, le dispositif d'ancrage proposé permet le montage facile d'un manchon, d'une gaine ou de tout autre objet souple, de forme tubulaire, sur une forme rigide, à la seule condition que l'objet à ancrer soit muni d'un talon dont l'armature, selon l'invention, est fragmentée.

L'invention évite de ce fait la manutention de pièces lourdes et volumineuses qui viennent compliquer les moules ou les outils de fabrication des manchons. Elle réduit les nécessités de stockage d'une grande variété de manchons, comportant chacun des contre-brides de raccordement normalisé; elle diminue également les surfaces nécessaires au stockage, les manchons sans contre-brides étant moins volumineux que ceux qui sont équipés; elle simplifie l'exécution des commandes en permettant le montage, pour un diamètre donné, des différents types de contre-brides; elle permet donc par ces divers avantages, un gain appréciable de productivité et améliore les conditions de travail lors de la fabrication des manchons.

Enfin, en cas d'avarie du manchon, les contre-brides sont démontables et donc réutilisables sur un manchon de remplacement, ce qui représente une économie non négligeable.

**Revendications**

1. Dispositif d'ancrage radial de structures tubulaires souples telles que des tuyaux en caoutchouc, des manchettes déformables, des compensateurs de dilatation, des membranes de suspension, sur l'ouverture d'une paroi rigide par appui sur un épaulement ou une bride après passage par une ouverture ou un alésage pratiqué sur ladite paroi rigide, ladite structure tubulaire souple – ou manchon – (3) comportant au moins un talon (2) renforcé par une armature (4), noyée au sein du caoutchouc, caractérisé en ce que ladite armature est constituée d'éléments individuels (9), afin d'offrir au talon (2) une possibilité de pliage dans le sens axial lui permettant de se glisser dans l'alésage de la paroi rigide (5) sans altérer sa rigidité radiale.

2. Dispositif d'ancrage selon la revendication 1, caractérisé en ce que les éléments (9) de l'armature fragmentée (4) du talon (2) ont même géométrie.

3. Dispositif d'ancrage selon l'une des revendications 1 ou 2, caractérisé en ce que le volume des zones de séparation (10) des éléments individuels (9) de l'armature fragmentée (4) est compris entre 0,5 et 50% du volume de l'un desdits éléments individuels (9).

4. Dispositif d'ancrage selon l'une des revendications 1 à 3, caractérisé en ce que les zones de séparation (10) des éléments individuels (9) de l'armature fragmentée (4) présentent, par rapport au plan radial de ladite armature, une inclinaison inférieure à 40°.

5. Dispositif d'ancrage selon l'une des revendications 1, 3 ou 4, caractérisé en ce que l'armature fragmentée (4) est constituée d'une alternance d'éléments individuels (9) de géométries différentes.

6. Dispositif d'ancrage selon l'une des revendications 1 à 5, caractérisé en ce que les zones de séparation (10) des éléments individuels (9) de l'armature fragmentée (4) présentent des formes géométriques complexes.

7. Dispositif d'ancrage, selon l'une des revendications 1 à 6, caractérisé en ce que l'armature fragmentée (4) du talon (2) est constituée d'éléments individuels (9) réalisés en un matériau métallique ou plastique dont le module est au moins égal à 1500 MPa.

8. Dispositif d'ancrage selon l'une des revendications 1 à 7, caractérisé en ce que le nombre des éléments (9) de l'armature fragmentée (4) de renforcement du talon (2) est de 8,12, 16 ou 24.

9. Manchon compensateur de dilatation caractérisé en ce que l'un au moins des talons (2) comporte un dispositif d'ancrage conforme à l'une des revendications 1 à 8.

10. Tuyau souple comportant des brides intégrées caractérisées en ce que leurs talons (2) comportent un dispositif d'ancrage conforme à l'une des revendications 1 à 8.

11. Membrane de suspension caractérisée en ce que l'un au moins des talons (2) comporte un dispositif d'ancrage conforme à l'une des revendications 1 à 8.

**Patentansprüche**

1. Vorrichtung zum radialen Verankern von biegsamen rohrförmigen Körpern, wie Kautschukrohren, verformbaren Manschetten, Dehnungsausgleichsverbindungen bzw. Aufhängungsmembranen, auf der Öffnung einer starren Wand durch Auflage auf einer Schulter oder einem Flansch nach Hindurchführen durch eine Öffnung oder eine Bohrung in dieser starren Wand, wobei der biegsame rohrförmige Körper – oder Muffe (3) – mindestens einen Wulst (2) aufweist, der durch eine im Kautschuk eingebettete Armierung (4) verstärkt ist, dadurch gekennzeichnet, daß die Armierung aus einzelnen Elementen (9) besteht, um dem Wulst (2) die Möglichkeit zum Umfalten in Axialrichtung zu geben, so daß er ohne Beeinträchtigung seiner radialen Steifigkeit durch die Bohrung in der starren Wand (5) gleiten kann.

2. Verankerungsvorrichtung nach Anspruch 1, dadurch gekennzeichnet, daß die Einzelelemente (9) der unterteilten Armierung (4) des Wulstes (2) in ihrer geometrischen Form übereinstimmen.

3. Verankerungsvorrichtung nach einem der Ansprüche 1 oder 2, dadurch gekennzeichnet, daß das Volumen der Abstandsbereiche (10) zwischen den Einzelelementen (9) der unterteilten Armierung (4) zwischen 0,5 und 50 Volumenprozent eines der einzelnen Elemente (9) beträgt.

4. Verankerungsvorrichtung nach einem der Ansprüche 1 bis 3, dadurch gekennzeichnet, daß die Abstandsbereiche (10) zwischen den Einzelelementen (9) der unterteilten Armierung (4) in bezug auf die Radialebene der Armierung eine Neigung von weniger als 40° aufweisen.

5. Verankerungsvorrichtung nach einem der Ansprüche 1, 3 oder 4, dadurch gekennzeichnet, daß die unterteilte Armierung (4) aus einer Folge von Einzelelementen (9) unterschiedlicher geometrischer Formen besteht.

6. Verankerungsvorrichtung nach einem der Ansprüche 1 bis 5, dadurch gekennzeichnet, daß die Abstandsbereiche (10) zwischen den Einzelelementen (9) der unterteilten Armierung (4) komplexe geometrische Formen haben.

7. Verankerungsvorrichtung nach einem der Ansprüche 1 bis 6, dadurch gekennzeichnet, daß die unterteilte Armierung (4) des Wulstes (2) aus Einzelelementen (9) besteht, die aus Metall oder Kunststoff mit einem Modul mindestens 1500 MPa hergestellt sind.

8. Verankerungsvorrichtung nach einem der Ansprüche 1 bis 7, dadurch gekennzeichnet, daß die unterteilte Armierung (4) zur Verstärkung des Wulstes (2) aus 8, 12, 16 oder 24 Elementen (9) besteht.

9. Dehnungsausgleichsmuffe, dadurch gekennzeichnet, daß mindestens einer der Wülste (2) eine Verankerungsvorrichtung nach einem der Ansprüche 1 bis 8 aufweist.

10. Biegsames Rohr mit integrierten Flanschen, dadurch gekennzeichnet, daß die Wülste (2) eine Verankerungsvorrichtung nach einem der Ansprüche 1 bis 8 aufweist.

11. Aufhängungsmembran, dadurch gekennzeichnet, daß zumindest einer der Wülste (2) eine Verankerungsvorrichtung nach einem der Ansprüche 1 bis 8 umfaßt.

**Claims**

1. Device for radial anchoring of pliable tubular structures such as rubber tubes, deformable sleeves, expansion compensators or suspension diaphragms, on the opening of a rigid wall by bearing on a shoulder or flange after passage through an opening or bore formed in the said rigid wall, the said pliable tubular structure – or sleeve – (3) comprising at least one heel (2) strengthened by a reinforcement (4) embedded within the rubber, characterised in that the said reinforcement is constituted by individual elements (9) in order to impart to the heel (2) the possibility of bending in the axial direction to allow it to be slipped into the bore of the rigid wall (5) without impairing its radial rigidity.

2. Anchoring device according to claim 1, characterised in that the elements (9) of the fragmented reinforcement (4) of the heel (2) have the same geometry.

3. Anchoring device according to one of claims 1 or 2, characterised in that the volume of the regions of separation (10) of the individual elements (9) of the fragmented reinforcement (4) is comprised between 0.5 and 50% of the volume of one of the said individual elements (9).

4. Anchoring device according to one of the claims 1 to 3, characterised in that the region of separation (10) of the individual elements (9) of the fragmented reinforcement (4) have an angle of inclination relative to the radial plane of the said reinforcement of less than 40°.

5. Anchoring device according to one of claims 1, 3 or 4, characterised in that the fragmented reinforcement (4) is formed by an alternation of individual elements (9) of different geometries.

6. Anchoring device according to one of claims 1 to 5, characterised in that the regions of separation (10) of the individual elements (9) of the fragmented reinforcement (4) have complex geometrical shapes.

7. Anchoring device according to one of claims 1 to 6, characterised in that the fragmented reinforcement (4) of the heel (2) is formed by individual elements (9) produced from a metal or plastics material whose modulus is at least equal to 1500 MPa.

8. Anchoring device according to one of claims 1 to 7, characterised in that the number of elements (9) of the fragmented reinforcement (4) for strengthening of the heel (2) is 8, 12, 16 or 24.

9. Expansion compensator sleeve characterised in that at least one of the heels (2) comprises an anchoring device according to one of claims 1 to 8.

10. Flexible tube comprising integral flanges, characterised in that their heels (2) comprise an anchoring device according to one of claims 1 to 8.

11. Suspension diaphragm, characterised in that at least one of the heels (2) comprises an anchoring device according to one of claims 1 to 8.

FIG_1a

FIG_1b

FIG_2

FIG.3

FIG.4

## FIG.5

## FIG 6

FIG.7a

FIG.7b

FIG.7c

FIG.7d

5

2

FIG_8

4

3

20

19

3

F3

FIG_9

17

21

18

4

23

22

FIG_10